# EUROPEAN PATENT SPECIFICATION

(11) **EP 2 297 238 B1**
(45) Date of publication and mention of the grant of the patent: **04.04.2018**
(21) Application number: 09774486.6
(22) Date of filing: 02.07.2009
(51) Int. Cl.: C08K 3/36, C08K 3/04, C08K 3/08

(54) **THIXOTROPIC CONDUCTIVE COMPOSITION**
THIXOTROPE LEITFÄHIGE ZUSAMMENSETZUNG
COMPOSITION CONDUCTRICE THIXOTROPE

(30) Priority: 03.07.2008 US 77894 P
(43) Date of publication of application: 23.03.2011
(73) Proprietor: Henkel IP & Holding GmbH, 40589 Düsseldorf (DE)
(72) Inventor: YANG, Hui, Middlesex NJ 08846 (US); XIAO, Allison, Yue, Belle Mead NJ 08502 (US); WANG, Minghai, 200433 Shanghai (CN); KONG, Hao, 201208 Shanghai (CN)
(74) Representative: Henkel IP Department
(86) International application number: PCT/US2009/049472
(87) International publication number: WO 2010/003036

(56) References cited:
- EP-A- 0 516 299
- EP-A- 1 832 636
- WO-A-93/05123
- US-A1- 2007 225 438

## Description

### BACKGROUND OF THE INVENTION

This invention relates to a conductive composition containing silver coated particles as the conductive filler.

Silver filled resin systems have proven to be successful as adhesives and encapsulants, particularly within the semiconductor fabrication and automotive industries, because these systems have good balance between rheology performance and conductivity. Silver fillers, however, are expensive, and it has been a goal within the various industries to find a less expensive alternative, without loss of conductivity or rheology performance. A rheology performance needs to be thixotropic because many of the silver filled resin compositions are dispensed by syringe: the composition must be sufficiently stable so that the filler does not settle out, sufficiently viscous not to drip out of the syringe at low shear, and yet sufficiently thin at higher shear to flow out of the syringe when applied.

Silver coated particles have been promoted as a low cost filler to replace pure silver, but the use of silver coated fillers do not lend the desired thixotropic performance to the conductive compositions that pure silver materials do. Thus, there is a need for a composition containing silver coated particles as the conductive filler, but with modified rheology properties to allow ease of dispensing.

### SUMMARY OF THE INVENTION

The present invention relates to conductive composition comprising a curable resin, a conductive filler, and an effective amount of a rheology modifier to provide a thixotropic index to the composition of greater than 3, wherein the rheology modifier is fumed silica and the surface of the fumed silica is polar, and wherein the effective amount of rheology modifier is in the amount of 0.01% by weight to 10% by weight of the total composition.

The present invention also relates to use of conductive composition according to the present invention as an adhesive or coating.

Furthermore, the present invention encompasses use of the conductive composition according to the present invention for attaching semiconductors.

This invention is a composition comprising a resin, a conductive filler, and an effective amount of a rheology modifier to provide a thixotropic index of greater than 3, and in some embodiments greater than 4, for the total composition. The presence of the rheology modifier modifies the rheology of the filled resin so that it has the desired thixotropic properties for application, and in particular, for dispensing by syringe. The rheology modifier also prevents or reduces settling of the filler. Typically, the rheology modifier is present in an amount from 0.1% to 10% by weight of the total composition. In other embodiments, the rheology modifier, is present in an amount from 0.1% to 5% by weight.

In some preferred embodiments, the rheology modifier will be a material being in the form of aggregates of nano-size particles. In another embodiment the rheology modifier is fumed silica, which is in the form of aggregates of nano-size particles.

The particular resin system is not critical to the invention, but inasmuch as a primary object for the conductive composition market is to lower cost, one type of preferred resin is an epoxy resin. The conductive filler in these compositions will be a filler that is not a pure noble metal. In varied embodiments, the conductive filler comprises a lower cost core material coated with a noble metal layer, thus providing a lower cost material but one that still retains acceptable conductivity by reason of its metal coating. In some embodiments, the filler is either a glass core or a copper core coated with a metal layer; in a further embodiment, the metal layer is silver for both the glass core and the copper core.

### DETAILED DESCRIPTION OF THE INVENTION

The conductive fillers for use within the conductive composition may be in the shape of fibers, flakes, spheres, or tubes. In one preferred embodiment, the conductive filler will be in the shape of flakes. As used herein when referring to the conductive filler, the term "flake", "flaky" or "flaky shape" refers to a flat thin piece or layer, which has a third-dimension size much smaller than the other two dimensions, and may be in regular or irregular shape. Independent of the shape, the conductive filler in one embodiment will comprise a core material coated with a noble metal. In typical embodiments, the filler is present in an amount of 10% to 95% by weight of the total composition; in other embodiments, the filler is present in an amount of 20% to 80% by weight of the total composition. In further embodiments, more than one type of conductive filler will be present, in which case, the conductive filler comprising a core material coated with a noble metal will be the major component of the total conductive filler. In some embodiments, the surface of the conductive filler may be treated with a fatty acid.

Suitable core materials include any low cost organic or inorganic material that is available in flake form and that is a good substrate for a conductive metal overlay. Preferred core materials are glass and copper. Suitable coating layers for the cores include any effective conductive material. In some preferred embodiments, the coating layer is selected from the group consisting of gold, silver, platinum, and palladium. In one embodiment the filler is silver coated glass flakes. In another embodiment the filler is silver coated copper flakes.

Referring now to the rheology modifiers and specifically fumed silica, fumed silica normally exists as aggregates of particles. The size of the individual particles of fumed silica is within the 5 to 10nm range. When the fumed silica is in a non-sheared state, the aggregates of particles can form three dimensional agglomerates (networks) in the resin, which contributes to the build-up of high viscosity. When shear is applied (as is done by dispensing from a syringe), the agglomerates are broken down, which results in a decrease of viscosity. When the high shear force is removed, the filled resin system will recover to the high viscosity state. This property gives the filled resin shear thinning performance, and prevents the filled resin from leaking from the syringe when no shear is applied, but allows easy dispensing when shear is applied. This performance can be even further improved when the surface of fumed silica is chemically modified to ensure weak interaction between the silica and the resin. This allows the silica to more readily stay in an agglomerated state, when there is no shear force or only low shear. Upon high shear, the interaction between silica-silica agglomerates is interrupted and a significant decrease of viscosity occurs. Similar mechanisms occur for carbon nano-tubes and graphite with respect to performance when shear is applied.

The choice of resin will be determined by the particular end use for the conductive composition and such choice is within the skill of the practitioner without undue experimentation. The resin may be a monomeric, oligomeric, or polymeric organic resin that can be cured or polymerized by chemical or by physical methods, or any combination thereof. The amount of resin present in the composition will be from 1 % to 60% by weight of the total composition. If a curing agent or hardener is used, the curing agent or hardener will be in an amount from 0.01 % to 20% by weight of the total composition. The curing agents will vary with the choice of resin and the type and amount of curing agent or hardener are within the expertise of one skilled in the art without undue experimentation. The choice of resin component of the composition can be any that has appropriate properties for the anticipated end use. Suitable resins include epoxies, cyanate esters, bismaleimides, and acrylates. Other suitable resins include polyurethanes, polyesters, polybutadienes, polysiloxanes, benzoxazines, bisoxazolines, and the polymer products of azides and alkynes.

Although there are no restrictions on the kinds of resins that can be used other than that they are suitable for the end use application, in general, epoxy resins give good adhesion and reliability and are economical in relation to other thermosetting resins. Suitable epoxy resins include, but are not limited to, bisphenol epoxies, naphthalenes, and aliphatic type epoxies. Commercially available materials include bisphenol type epoxy resins (Epiclon 830LVP, 830CRP, 835LV, 850CRP) available from Dainippon Ink & Chemicals, Inc.; naphthalene type epoxy (Epiclon HP4032) available from Dainippon Ink & Chemicals, Inc.; aliphatic epoxy resins (Araldite CY179, 184, 192, 175, 179) available from Ciba Specialty Chemicals, (Epoxy 1234, 249, 206) available from Union Carbide Corporation, and (EHPE-3150) available from Daicel Chemical Industries, Ltd. Other suitable epoxy resins include cycloaliphatic epoxy resins, bisphenol-A type epoxy resins, bisphenol-F type epoxy resins, epoxy novolac resins, biphenyl type epoxy resins, naphthalene type epoxy resins, dicyclopentadiene-phenol type epoxy resins, reactive epoxy diluents, and mixtures thereof. In one embodiment, the epoxy resin is that sold under the tradename Ablebond® 3230 by Ablestik Laboratories.

Suitable cyanate ester resins include those having the generic structure 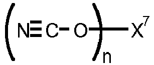 in which n is 1 or larger, and X⁷ is a hydrocarbon group. Exemplary X⁷ entities include bisphenol, phenol or cresol novolac, dicyclopentadiene, polybutadiene, polycarbonate, polyurethane, polyether, or polyester. Commercially available materials include; AroCy L-10, AroCy XU366, AroCy XU371, AroCy XU378, XU71787.02L, and XU 71787.07L, available from Huntsman LLC; Primaset PT30, Primaset PT30 S75, Primaset PT60, Primaset PT60S, Primaset BADCY, Primaset DA230S, Primaset MethylCy, and Primaset LECY, available from Lonza Group Limited; 2-allyphenol cyanate ester, 4-methoxyphenol cyanate ester, 2,2-bis(4-cyanatophenol)-1,1,1,3,3,3-hexafluoropropane, bisphenol A cyanate ester, diallylbisphenol A cyanate ester, 4-phenylphenol cyanate ester, 1,1,1-tris(4-cyanatophenyl)ethane, 4-cumylphenol cyanate ester, 1,1-bis(4-cyanateophenyl)ethane, 2,2,3,4,4,5,5,6,6,7,7-dodecafluorooctanediol dicyanate ester, and 4,4'-bisphenol cyanate ester, available from Oakwood Products, Inc.

Suitable bismaleimide (BMI) resins are those having the structure 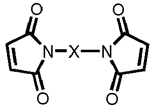 in which X is an aromatic group. Bismaleimide resins having these X bridging groups are commercially available, and can be obtained, for example, from Sartomer (USA) or HOS-Technic GmbH (Austria).

Additional exemplary maleimide resins include those having the generic structure 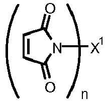 in which n is 1 to 3 and X¹ is an aliphatic or aromatic group. Exemplary X¹ entities include, poly(butadienes), poly(carbonates), poly(urethanes), poly(ethers), poly(esters), simple hydrocarbons, and simple hydrocarbons containing functionalities such as carbonyl, carboxyl, amide, carbamate, urea, or ether. These types of resins are commercially available and can be obtained, for example, from National Starch and Chemical Company and Dainippon Ink and Chemical, Inc.

Additional maleimide resins include 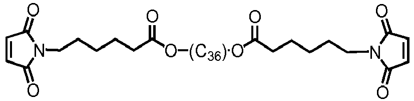 in which C₃₆ represents a linear or branched chain (with or without cyclic moieties) of 36 carbon atoms; 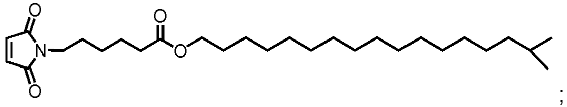 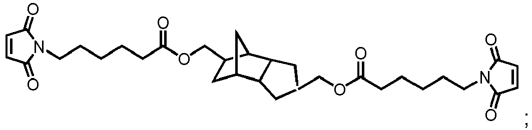 and

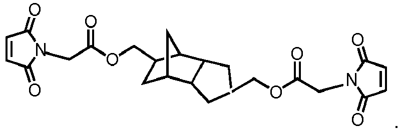

Suitable acrylate resins include those having the generic structure 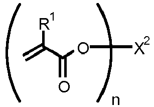 in which n is 1 to 6, R¹ is -H or -CH₃. and X² is an aromatic or aliphatic group. Exemplary X² entities include poly(butadienes), poly(carbonates), poly(urethanes), poly(ethers), poly(esters), simple hydrocarbons, and simple hydrocarbons containing functionalities such as carbonyl, carboxyl, amide, carbamate, urea, or ether. Commercially available materials include butyl (meth)acrylate, isobutyl (meth)acrylate, 2-ethyl hexyl (meth)acrylate, isodecyl (meth)acrylate, n-lauryl (meth)acrylate, alkyl (meth)acrylate, tridecyl (meth)acrylate, n-stearyl (meth)acrylate, cyclohexyl(meth)acrylate, tetrahydro-furfuryl(meth)acrylate, 2-phenoxy ethyl(meth)acrylate, isobornyl(meth)acrylate, 1,4-butanediol di(meth)acrylate, 1.6 hexanediol di(meth)acrylate, 1,9-nonandiol di(meth)acrylate, perfluorooctylethyl (meth)acrylate, 1,10 decandiol di(meth)acrylate, nonylphenol polypropoxylate (meth)acrylate, and polypentoxylate tetrahydrofurfuryl acrylate, available from Kyoeisha Chemical Co., LTD; polybutadiene urethane dimethacrylate (CN302, NTX6513) and polybutadiene dimethacrylate (CN301, NTX6039, PRO6270) available from Sartomer Company, Inc; polycarbonate urethane diacrylate (ArtResin UN9200A) available from Negami Chemical Industries Co., LTD; acrylated aliphatic urethane oligomers (Ebecryl 230, 264, 265, 270,284, 4830, 4833, 4834, 4835, 4866, 4881, 4883, 8402, 8800-20R, 8803, 8804) available from Radcure Specialities, Inc; polyester acrylate oligomers (Ebecryl 657, 770, 810, 830, 1657, 1810, 1830) available from Radcure Specialities, Inc.; and epoxy acrylate resins (CN104, 111, 112, 115, 116, 117, 118, 119, 120, 124, 136) available from Sartomer Company, Inc. In one embodiment the acrylate resins are selected from the group consisting of isobornyl acrylate, isobornyl methacrylate, lauryl acrylate, lauryl methacrylate, poly(butadiene) with acrylate functionality and poly(butadiene) with methacrylate functionality.

In addition to the resin, conductive filler, rheology modifier, and curing agent (if used), the conductive compositions may also contain dispersion agents, adhesion promoters, and other typical additives as deemed appropriate by the practitioner.

In one embodiment, the present invention provides a filled resin composition comprising a resin, a conductive filler, and a rheology modifier selected from the group consisting of fumed silica, graphite, and carbon nano-tubes. In one embodiment, the conductive filler is a silver coated material flake filler. In further embodiments the silver coated flake filler is a silver coated glass or a silver coated copper flake filler.

In one embodiment, the conductive filler flakes will have an average diameter from 0.001 µm to 100 µm; in another embodiment, from 1 µm to 50 µm; in another embodiment from 2 µm to 25 µm. In one embodiment, the aspect ratio (diameter/thickness) of the conductive filler flake is from 200 to 2, more preferably from 150 to 2.5, most preferably from 100 to 3.

In one embodiment when the coating is a noble metal coating, and in particular a silver coating, the coating layer by weight is in the range from 1% to 70%; in another, from 1% to 50%; in another, from 3% to 40%; and in another, from 5% to 30%.

In some embodiments, the fumed silica rheology modifier is present in an amount from 0.01 % by weight to 10% by weight of the total filled resin composition. In other embodiments, the fumed silica is present in an amount from 0.1% to 5% by weight.

For all the CONTROLS AND EXAMPLES, the following protocols and materials were used.

MIXING PROCESS: For CONTROL A and EXAMPLES 1 through 6, the mixing process was accomplished with a SpeedMixer (DAC 150 FVZ-K from Flacktek Inc.) at 3000 rpm for one minute. If the formulation did not appear uniform by visual observation, mixing for an additional one minute at 3000 rpm was performed. For CONTROLS B through I and EXAMPLES 7 through 16, the mixing process was done by hand mixing for five minutes. If the formulation did not appear uniform by visual observation, mixing by hand for another five minutes was performed.

VISCOSITY AND THIXOTROPIC INDEX: Viscosity measurements were taken on an approximate one gram sample of formulation using a Brookfield cone/plate viscometer with spindle type CP-51 at 0.5 rpm and 5 rpm rotation rate at ambient temperature. For the samples containing graphite, the viscosity was measured on an ARES viscometer and the shear rate converted to conform to Brookfield rpms. The thixotropic index (TI) was calculated as the ratio of the viscosity at 0.5 rpm divided by the viscosity at 5 rpm.

ELECTRICAL CONDUCTIVITY. Electrical conductivity is expressed as volume resistivity (VR) and was calculated by measuring the resistivity of a thin film of the filled resin after cure. The thin film was prepared as follows. the uncured filled resin was cast into a track on a glass slide, the track measuring 5 cm in length by 5 mm in width; the thickness of the uncured resin within the track was in the range of 30-50 microns. The filled resin was cured by heating the assembly of glass slide and filled resin in an oven in which the curing temperature was ramped from 40°C to 175°C over 40 minutes, then held at 175°C for 15 minutes. After cure a circuit was applied to the resin in the track and the volume resistance calculated from a four point probe using the equation VR = R*W*T/L where R is the resistance in Ohms measured along the length L in centimeters of the cured resin in the track; W is the width in centimeters of the cured resin in the track; and T is the thickness in centimeters of the cured resin in the track.

**MATERIALS:**

| | |
|---|---|
| Epoxy 3230: | an epoxy resin sold under the tradename ABLEBOND® 3230 by Ablestik Laboratories |
| Epoxy 84 | an epoxy resin sold under the tradename ABLEBOND® 84-1LMISR4 by Ablestik Laboratories |
| Epoxy 803 | an epoxy resin sold under the tradename EPICLON 830-S from DIC Inc. |
| MHHPA | Methylhexahydrophthalic anhydride purchased from the Lonza group, a hardener for epoxy resins |
| CN | cyanate ester, 1-(2-cyanoethyl)-2-ethyl-4-methylimidazole, sold under the tradename CURIMID CN by Borregaard Synthesis Co. |
| BMI | proprietary bismaleimide having the structure |
| | 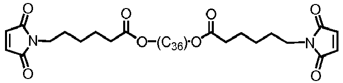 |
| | in which C₃₆ represents a linear or branched chain (with or without cyclic moieties) of 36 carbon atoms |
| Acryl SR248 | acrylate sold under the tradename SR248 by Sartomer Shanghai Ltd. |
| RICON131MA10 | acrylate sold under the tradename RICON 131MA10 by Sartomer Shanghai Ltd.), |
| Peroxide | Dicumy peroxide purchased from Sigma-Aldrich Shanghai Ltd. |
| Ag20/glass | flake silver coated glass flake filler at 20 wt% silver sold under the tradename SG15F20 by Potters Industries Inc. |
| Ag40 /glass | flake silver coated glass flake filler at 40 wt% silver sold under the tradename SG05TF40 by Potter Industries Inc. |
| Ag/glass fiber | silver coated glass fiber filler sold under the tradename AGCLAD by Potters Industries Inc. |
| Ag/glass beads | silver coated glass beads sold under the tradename SG02S40-exp by Potters Industries Inc. |
| Ag/Cu flake | silver coated copper flake filler sold under the tradename 600C by Ferro Inc. |
| Silica 200 | fumed silica sold under the tradename AEROSIL 200 by Evonik Degussa, with the silica surface modified to be polar |
| Silica R972 | fumed silica sold under the tradename AEROSIL R972 by Evonik Degussa with the silica surface modified to be non-polar |
| Silica 720 | fumed silica sold under the tradename TS-720 by Cabot |
| Graphite 301 | 8um graphite sold under the tradename TC 301 by Asbury Graphite Mills Inc. |

CONTROL A AND EXAMPLES 1 THROUGH 3 covered by the claims and 4-6 not covered by the claims.

CONTROL A was prepared to contain 50 parts by weight of Epoxy 3230, 50 parts by weight Ag/glass flake. No rheology modifier was added. The TI was calculated as 3.22 (viscosity at 0.5 RPM was 22930 mPa.s; viscosity at 5 RPM was 7127mPa.s). The VR was 8.39E-³ Ω·cm. The filler did not settle out.

EXAMPLE 1. AG/GLASS FLAKE. A composition was prepared to contain 50 parts by weight of Epoxy 3230, 50 parts by weight of Ag 20/glass flake, and 1.5 parts by weight of Silica 200. The TI was 6.12 (viscosity at 0.5 RPM was 49150 mPa.s; viscosity at 5 RPM was 8028 mPa.s). The VR was 6.85E⁻³ Ω·cm. These results show that the addition of the fumed silica as a rheology modifier improves the shear thinning capability of the filled resin and provides a thixotropic index over 4 without any significant loss in conductivity. The composition was stable: the filler did not settle out.

EXAMPLE 2. AG/GLASS FIBER. A composition was prepared to contain 50 parts by weight of Epoxy 3230, 50 parts by weight of Ag/glass fiber and 1.5 parts by weight of Silica 200 as a rheology modifier. The TI was 4.02 (viscosity at 0.5 RPM was 28670 mPa.s; viscosity at 5 RPM was 7127 mPa.s) and the VR was 2.77E⁻¹ Ω·cm. These results show that the use of silver coated glass fiber is less effective for conductivity than the use of silver coated glass flakes. However, the presence of the fumed silica as a rheology modifier improves the shear thinning capability of the filled resin and provides a thixotropic index over 4. The glass fiber filler settled out before the addition of the fumed silica. With the presence of fumed silica, the glass fiber filler did not settle out.

EXAMPLE 3. AG/GLASS BEADS: A composition was prepared to contain 50 parts by weight of Epoxy 3230, 50 parts by weight of Ag/glass beads and 1.5 parts by weight of Silica 200 as a rheology modifier. The TI was 3.88 (viscosity at 0.5 RPM was 38500 mPa.s; viscosity at 5 RPM was 9912 mPa.s) and the VR was 1.90E⁻² Ω·cm. These results show that the use of silver coated glass beads is less effective for both rheology and conductivity than the use of silver coated glass flakes, but performance may still be adequate for some applications.

EXAMPLE 4. AG/GLASS FLAKES AND SILICA WITH NON-POLAR SURFACE. A composition was prepared to contain 50 parts by weight of Epoxy 3230, 50 parts by weight of Ag 20/glass flake and 1.5 parts by weight of Silica R972. The TI was 3.73 (viscosity at 0.5 RPM was 25390 mPa.s; viscosity at 5 RPM was 6799 mPa.s) and the VR was 1.08E⁻² Ω·cm. Comparing this to Example 1, it can be seen that when the surface of the silica is modified to be polar as in Example 1, both rheology and conductivity performance are improved.

EXAMPLE 5. GRAPHITE. A composition was prepared to contain 48 parts by weight of Epoxy 3230, 52 parts by weight of Ag/glass beads and 4.6 parts by weight Graphite 301. The TI was 4.28 (viscosity at 0.5 RPM was 114250 mPa.s; viscosity at 5 RPM was 26710 mPa.s) and the VR was 9.87E⁻³ Ω·cm. This sample shows that graphite is effective to improve rheology and conductivity.

EXAMPLE 6. GRAPHITE. A composition was prepared to contain 52 parts by weight of Epoxy 3230, 48 parts by weight of Ag/glass beads and 8.32 parts by weight Graphite 301 as rheology modifier. The TI was 4.50 (viscosity at 0.5 RPM was 126920 mPa.s; viscosity at 5 RPM was 28180 mPa.s) and the VR is 1.98E⁻² Ω·cm. This example shows that graphite is effective to improve conductivity as well as rheology.

The results from CONTROL A and EXAMPLES 1 through 6 are reported here in TABLE I:

**TABLE I**

| Composition parts by wt | Control A | Ex 1 | Ex 2 | Ex 3 | Ex 4 | Ex 5 | Ex 6 |
|---|---|---|---|---|---|---|---|
| Epoxy resin | 50 | 50 | 50 | 50 | 50 | 50 | 50 |
| Ag 20/glass flake | 50 | 50 | | | 50 | 50 | 50 |
| Ag/glass fiber | | | 50 | | | | |
| Ag/glass beads | | | | 50 | | | |
| Silica 200 | | 1.5 | 1.5 | 1.5 | | | |
| Silica R972 | | | | | 1.5 | | |
| Graphite 301 | | | | | | 4.6 | |
| Rheology and Conductivity | | | | | | | 8.32 |
| Viscosity mPa.s at 0.5/5.0 rpms | 22930 /7127 | 49150 /8028 | 28670 /7127 | 38500 /9912 | 25390 /6799 | 11425 0/2671 0 | 12692 0/2818 0 |
| TI | 3.22 | 6.12 | 4.02 | 3.88 | 3.73 | 4.28 | 4.50 |
| VR Q·cm | 8.39E^{- 3} | 6.85E^{- 3} | 2.77E^{- 1} | 1.90E^{- 2} | 1.08E^{- 2} | 9.87E^{- 3} | 1.98E^{- 2} |

CONTROL B AND EXAMPLES 7 THROUGH 9 not covered by the claims. CONTROL B was prepared to contain Epoxy 84 and Ag/Cu flake in the weight percent shown in Table II. No rheology modifier was added. EXAMPLES 7 though 9 contained varying weights of Silica 720 as shown in Table II. The TI for the control and samples was calculated and the results reported in Table II. The results show that the addition of fumed silica increases the TI to greater than 4 for compositions containing copper flakes coated with silver.

**TABLE II**

| Composition components in weight percent | Control B | Ex 7 | Ex 8 | Ex 9 |
|---|---|---|---|---|
| Epoxy resin | 30.0% | 29.97% | 29.84% | 29.73% |
| Ag/Cu flake | 70.0% | 69.93% | 69.96% | 70% |
| Silica 720 | | 0.1% | 0.2% | 0.27% |
| Total % | 100.0% | 100.0% | 100.0% | 100.0% |
| Thixotropic Index | 2.99 | 4.14 | 4.73 | 4.17 |

CONTROLS C, D, AND E, AND EXAMPLES 10 THROUGH 12 not covered by the claims. CONTROLS C, D, and E were prepared to contain Epoxy 803, MHHPA, and CN in parts by weight as shown in Table III. EXAMPLES 10 through 12 further contained Silica 720 and varying amounts of Ag/Cu flake in parts by weight as shown in Table III. The TI for the controls and samples was calculated and the results reported in Table III. The results show that the presence of the fumed silica increases the thixotropic index, thus improving the shear thinning performance.

**TABLE III**

| Composition Components | wt% | Control C | Ex 10 | Control D | Ex 11 | Control E | Ex 12 |
|---|---|---|---|---|---|---|---|
| Epoxy 803 | 55.5% | | | | | | |
| MHHPA | 44.4% | | | | | | |
| CN | 0.1% | | | | | | |
| Total % resin | 100.0% | | | | | | |
| Resin % | | 40.0% | 40.0% | 30.0% | 30.0% | 25.0% | 25.0% |
| Ag/Cu flake | | 60.0% | 59.8% | 70.0% | 69.8% | 75.0% | 74.8% |
| Silica 720 | | | 0.2% | | 0.2% | | 0.2% |
| Vis at 0.5rpm, mPa.s | | 3313 | 6627 | 6627 | 17398 | 45566 | 73734 |
| Vis at 5rpm, mPa.s | | 1574 | 2319 | 3148 | 4639 | 16072 | 18143 |
| TI | | 2.1 | 2.86 | 2.11 | 3.75 | 2.84 | 4.06 |

CONTROL F AND EXAMPLE 13 not covered by the claims. CONTROL F and EXAMPLE 13 were prepared to contain BMI and AcrylSR248 and RICON 131MA10, peroxide, and Ag/copper in parts by weight shown in Table IV. Example 13 further contained Silica 720 in parts by weight shown in Table IV. The TI for control and sample was calculated and the results reported in Table IV. The results show that the addition of the fumed silica increases the TI and consequently improves shear thinning for the composition.

**TABLE IV**

| Composition component | | Control F | Ex 13 |
|---|---|---|---|
| BMI | 32.0% | 19.2% | 19.2% |
| Acryl SR248 | 55.2% | 33.12% | 33.12% |
| RICON 131MA10 | 12.0% | 7.2% | 7.2% |
| Peroxide | 0.8% | 0.48% | 0.48% |
| Ag/Cu flake | | 40% | 39.8% |
| Silica 720 | | | 0.2% |
| Total | 100.0% | 100.0% | 100.0% |
| Viscosity at 0.5rpm (mPa.s) | | 7456 | 17398 |
| Viscosity at 5rpm (mPa.s) | | 5550 | 8699 |
| Thixotropic Index | | 1.34 | 3.50 |

CONTROLS G, H, AND I AND EXAMPLES 14 THROUGH 16 not covered by the claims. CONTROLS AND EXAMPLES were prepared to contain Epoxy 830, MHHPA, CN, and Ag/glass flake, in parts by weight shown in TABLE V. EXAMPLES 14 through 16 further contained Silica720 in parts by weight shown in TABLE V. Both A/glass flake and Ag/glass particles were used as filler. The TI for CONTROLS and EXAMPLES was calculated and the results reported in TABLE V. The results show that the addition of fumed silica improves the shear thinning performance of the compositions.

**TABLE V.**

| | Component | Control G | Ex 14 | Contro l H | Ex 15 | Contro l I | Ex 16 |
|---|---|---|---|---|---|---|---|
| Resin | Epoxy 830 | 50 | 50 | 50 | 50 | 50 | 50 |
| | MHHPA | 40 | 40 | 40 | 40 | 40 | 40 |
| | CN | 0.2 | 0.2 | 0.2 | 0.2 | 0.2 | 0.2 |
| | Silica 720 | | 1 | | 1 | | 1 |
| | Total Resin % | 60% | 60% | 60% | 60% | 60% | 60% |
| Filler | Ag 40/glass flake | | | 40% | 40% | 30% | 30% |
| | Ag/glass beads | 40% | 40% | % | | 10% | 10% |
| | Total Filler % | 40% | 40% | 40% | 40% | 40% | 40% |
| | | | | | | | |
| Viscosity at 5rpm in mPa.s | | 1988 | 5053 | 12261 | 19966 | 9527 | 17149 |
| TI | | 1.25 | 3.28 | 2.4 | 4.19 | 2.08 | 4.15 |

### UTILITY

The inventive compositions can be used as adhesives or coatings. In one embodiment, the inventive compositions can be used to attach semiconductors, either as bare silicon dies or as packages, to substrates. The substrates include, without limitation, other bare dies, leadframes, circuit boards, or arrays. In other embodiments, the invention herein is a method for producing an article with a component bonded to a substrate, the method comprising applying a curable composition comprising a silver coated material flake filler onto at least a part of a substrate surface, and bonding the component to the coated substrate surface. The silver coated material flake filler may be a silver coated copper flake or a silver coated glass flake. In one aspect, the method may further comprise a step of thermally curing the composition at a temperature above room temperature, the step being performed after contacting the substrate with the adhesive. In one embodiment, the component bonded to a substrate is a semiconductor component. In other embodiments, the inventive compositions can be used to produce other articles of manufacture.

## Claims

1. A conductive composition comprising a curable resin, a conductive filler, and an effective amount of a rheology modifier to provide a thixotropic index to the composition of greater than 3, wherein the rheology modifier is fumed silica and the surface of the fumed silica is polar, and wherein the effective amount of rheology modifier is in the amount of 0.01% by weight to 10% by weight of the total composition.

2. The conductive composition of claim 1 in which the effective amount of the rheology modifier provides a thixotropic index of greater than 4.

3. The conductive composition of claim 1 in which the conductive filler comprises a core material selected from the group consisting of glass and copper coated with a metal layer selected from the group consisting of gold, silver, platinum, and palladium.

4. The conductive composition of claim 3 in which the filler is silver coated glass.

5. The conductive composition of claim 3 in which the filler is silver coated copper.

6. Use of conductive composition of any one of claims 1 to 5 as an adhesive or coating.

7. Use of the conductive composition of any one of claims 1 to 5 for attaching semiconductors.

## Patentansprüche

1. Leitfähige Zusammensetzung, umfassend: ein härtbares Harz, einen leitfähigen Füllstoff und eine wirksame Menge eines Rheologiemodifizierers, um einen Thixotropieindex von über 3 für die Zusammensetzung bereitzustellen, wobei der Rheologiemodifizierer pyrogene Kieselsäure ist und die Oberfläche der pyrogenen Kieselsäure polar ist, und wobei die wirksame Menge des Rheologiemodifizierers in der Menge von 0,01 Gew.-% bis 10 Gew.-% der Gesamtzusammensetzung liegt.

2. Leitfähige Zusammensetzung nach Anspruch 1, wobei die wirksame Menge des Rheologiemodifizierers einen Thixotropieindex von über 4 bereitstellt.

3. Leitfähige Zusammensetzung nach Anspruch 1, wobei der leitfähige Füllstoff ein Kernmaterial, ausgewählt aus der Gruppe bestehend aus Glas und Kupfer, beschichtet mit einer Metallschicht, ausgewählt aus der Gruppe bestehend aus Gold, Silber, Platin und Palladium, umfasst.

4. Leitfähige Zusammensetzung nach Anspruch 3, wobei der Füllstoff silberbeschichtetes Glas ist.

5. Leitfähige Zusammensetzung nach Anspruch 3, wobei der Füllstoff silberbeschichtetes Kupfer ist.

6. Verwendung der leitfähigen Zusammensetzung nach einem der Ansprüche 1 bis 5 als ein Klebstoff oder eine Beschichtung.

7. Verwendung der leitfähigen Zusammensetzung nach einem der Ansprüche 1 bis 5 zum Anbringen von Halbleitern.

## Revendications

1. Composition conductrice comprenant une résine durcissable, une charge conductrice et une quantité suffisante d'un modificateur de rhéologie pour fournir un indice thixotropique à la composition supérieur à 3, dans laquelle le modificateur de rhéologie est de la silice fumée et la surface de la silice fumée est polaire, et dans laquelle la quantité suffisante de modificateur de rhéologie est en une quantité comprise entre 0,01 % en poids et 10 % en poids de la composition totale.

2. Composition conductrice selon la revendication 1, dans laquelle la quantité suffisante du modificateur de rhéologie fournit un indice thixotropique supérieur à 4.

3. Composition conductrice selon la revendication 1, dans laquelle la charge conductrice comprend un matériau central choisi dans le groupe constitué de verre et de cuivre recouverts d'une couche métallique choisie dans le groupe constitué de l'or, de l'argent, du platine et du palladium.

4. Composition conductrice selon la revendication 3, dans laquelle la charge est en verre recouvert d'argent.

5. Composition conductrice selon la revendication 3, dans laquelle la charge est en cuivre recouvert d'argent.

6. Utilisation de composition conductrice selon l'une quelconque des revendications 1 à 5 en tant qu'adhésif ou revêtement.

7. Utilisation de la composition conductrice selon l'une quelconque des revendications 1 à 5 pour fixer des semi-conducteurs.
